# EUROPEAN PATENT SPECIFICATION

(11) **EP 2 119 498 B1**
(45) Date of publication and mention of the grant of the patent: **18.12.2013**
(21) Application number: 09153793.6
(22) Date of filing: 26.02.2009
(51) Int. Cl.: B01J 13/04

(54) **Procedure for microencapsulation of phase change materials by spray-drying**
Verfahren zur Mikroverkapselung von phasenändernden Materialien durch Spritztrocknung
Procédure de microencapsulation de matériaux de changement de phase par séchage par atomisation

(30) Priority: 12.05.2008 ES 200801360
(43) Date of publication of application: 18.11.2009
(73) Proprietor: Acciona Infraestructuras, S.A., 28108 Alcobendas, Madrid (ES)
(72) Inventor: Gravalos Moreno, Javier, 28108 Alcobendas, Madrid (ES); Calvo Herrera, Ignacio, 28108 Alcobendas, Madrid (ES); Mieres Royo, Juan, 28108 Alcobendas, Madrid (ES); Cubillo Capuz, Jose, 28108 Alcobendas, Madrid (ES); Borreguero Simon, Ana María, 13004 Ciudad Real (ES); Carmona Franco, Manuel, 13004 Ciudad Real (ES); Rodriguez Romero, Juan F., 13004 Ciudad Real (ES); Valverde Palomino, José L., 13004 Ciudad Real (ES)
(74) Representative: Pons Ariño, Angel

(56) References cited:
- WO-A1-2006/092439
- WO-A1-2007/107171
- WO-A1-2008/134908
- DE-A1- 19 749 731
- DE-A1-102007 034 590
- US-A1- 2002 009 473
- M.N.A. HAWLADER, E.A.: "Microencapsulated PCM thermal-energy storage system" APPLIED ENERGY, vol. 74, no. 1-2, 14 January 2003 (2003-01-14), pages 195-202, XP002543696

## Description

The present invention relates to a process for obtaining microcapsules that contain phase change materials (PCMs) by means of the physical technique of spray drying.

### PRIOR STATE OF THE ART

Currently a great amount of microencapsulated substances are used covering a wide range of applications. One of the most used application is the capacity to confer thermoregulating properties to the materials in which they are incorporated. In particular, microencapsulation is used in the textile and footwear industries to improve the thermal properties and the comfort of sportswear, military uniforms, pyjamas and other clothing items. It is also used in building materials, automobile interior design and many other consumer products. These microcapsules contain inside phase-change materials (PCMs), which are responsible for causing the thermoregulating effect in the materials in which they are incorporated. The PCM absorbs or releases heat in response to ambient temperature changes thanks to its phase change latent heat. The walls enclosing and covering the PCM are usually of a polymeric nature.

Microencapsulation can be carried out by chemical processes such as *complex coacervation, interfacial polymerization, suspension polymerization and solvent extraction-evaporation* and physical processes such as *spray drying, fluidized bed and Wurster process, ionic extrusion and gelation, etc.*

Chemical methods for incorporating paraffins with polymers have been described in patent applications WO03/099427A1, US5456852A, US5916478A, WO2007/040395A1, and WO20071107171A1. These patents claim different interfacial polymerization processes and have differences as regards the polymerization technique used. Thus, for example, an interfacial polymerization technique that generates microcapsules made up of an active PCM core and two casings is described in patent application W0031099427A1. The inner casing is obtained by the reaction between propylene glycol and polyisocyanate, and the outer casing by the reaction between polyisocyanates and polyamides.

These processes generate highly toxic waste, require relatively long operation times and, in addition, pose difficulties to being implemented in a continuous process, which restricts their application on an industrial scale.

The production of solid polymer-covered PCM spheres is described in patent US5709945A. Initially, the PCM is melted, and it is sprayed on a solvent at a temperature below the melting point of the PCM. The solvent evaporates and, finally, polymers such as acrylic styrene, vinylidene chloride copolymer, shellac, isobutylene, polycarbonates and amides are dissolved in a suitable solvent and subsequently sprayed on the solid PCM particles. This PCM-encapsulation process is carried out in a fluidized bed.

A method for incorporating paraffins in polymers by absorption is described in patent application EP1838802A2. Melted paraffin is placed in contact with pellets of low-polarity polymers such as low-density polyethylene or methyl methacrylate and subsequently filtered to remove the liquid paraffin not incorporated in the polymer.

The production of macrocapsules containing phase-change material microcapsules is described in patent application US2004/0169299A1. The macrocapsules are obtained by dispersing the microcapsules over a gel and adding the mixture to a solution containing an agent that interweaves the gel, forming macrocapsules made up of PCM microcapsules.

The spray-drying technique has been used to date for the encapsulation of pesticides by interfacial polycondensation followed by spray drying in the presence of polyvinyl alcohol (PVA). In patent ES2163891T3, reference is made to spray-dried microcapsules as an intermediate synthesis step, not as a process for forming these microcapsules.

M.N.A. HAWLADER et al., "Microencapsulated PCM thermal-energy storage system", APPLIED ENERGY, vol. 74, no. 1-2, 14 (2003-01-14), pages 195-202 discloses a microencapsulation process, comprising spray-drying an emulsion of parrafin wax in an aqueous solution comprising gelatin and acacia.

### DESCRIPTION OF THE INVENTION

The process proposed by the present invention for the microencapsulation of PCMs is a physical method known as spray drying. This technique essentially consists in spraying a homogeneous or emulsified liquid stream inside a chamber, where it is placed in contact with a gas stream-usually air or nitrogen as an inert gas-at a temperature suitable for enabling the evaporation of the solvent and obtaining a product in solid-particle form.

The present invention is based on the use of thermoplastic polymers, without any reactions during the encapsulation process, to form the cover together with the use of a non-aqueous phase as the vehicle for the creation of the microcapsules in contrast with the aqueous methods used in the state of the art, The non-aqueous phase is condensed and reused in the process.

Thus, the present invention provides a process for obtaining microcapsules containing phase-change materials by means of the spray-drying technique in way that is fast and easy, environmentally friendly, highly flexible and very efficient, in addition to an easy industrial scaling thereof. By means of the process of the present invention, almost no waste is generated since it is possible to recover and reuse the solvent and/or the components not utilized during the formation of microcapsules.

The process of encapsulation of the present invention by using this technique comprises the following steps:
1. Spraying the feed solution or emulsion in small droplets by means of an atomizer.
2. Placing the previous dispersion in contact with the gas stream at the temperature necessary for the complete evaporation of the solvent. In the absence of a solvent, the dry droplets turn into solid particles.
3. Separating the solid particles carried by the gas phase by means of cyclones and/or filters.

Optionally, the solvent may be recovered from the gas stream by means of a system of condensers, which enables it to be subsequently recirculated into the process.

Additionally, this technique requires a preliminary step of preparing an initial solution, also called the feed solution, that allows to subsequently feed it into the spray-drying equipment. This feed will be made up of the material to be encapsulated, the encapsulating agent and a solvent or dispersing medium allowing to obtain a homogenous liquid mixture.

Therefore, a first aspect of the present invention relates to a phase-change material microencapsulation process (hereinafter the process of the invention) comprising the following steps:
a. preparing a solution of:
   i. at least one active phase-change material;
   ii. one encapsulating agent selected from at least one polymer or one polymer and one copolymer; and
   iii. one solvent.
b. spraying the solution of step a);
c. the dispersion obtained in step b) is placed in contact with a gas stream, which evaporates the solvent and causes the microcapsules to dry. Preferably, the carrier gas is nitrogen, and more preferably, there is only one small purge; the rest is compressed and recirculated into the equipment;
d. separating the microcapsules formed in step c) from the gas stream, preferably by means of cyclones and/or filters.

One preferred embodiment of the process of the invention comprises in addition the step of:
e. condensing the evaporated solvent, obtained in step c), to reuse it in the process of the invention.

Preferably, the encapsulating agent is at least one polyethylene-type polymer. More preferably, the encapsulating agent is the combination of one polymer and one copolymer. More preferably, this copolymer may be ethyl vinyl acetate (EVA).

On the other hand, more preferably, the polyethylene used might be both high-density polyethylene (HDPE) and low-density polyethylene (LDPE) or any of their combinations.

In the present invention, substances that require an input of thermal heat to change phase, in particular, going from the solid state to the liquid state and vice versa, are understood as "active phase-change materials"; that stored heat can be used to be released again to the environment. These materials are preferably organic compounds, more preferably of a hydrophobic nature, and may be chosen from pure paraffins or mixtures thereof.

Paraffins may be natural, synthetic or any of their combinations. The group of alkanes having 13 or more carbon atoms e.g. tridecane, tetradecane, , pentadecane, hexadecane, octadecane - preferably alkanes with 13 to 20 atom carbons - are considered paraffins. Thus, both pure paraffins and any mixture thereof can be used, with melting points that can range from 4 °C to 45 °C.

A preferred embodiment of the process of the present invention comprises the use of an additive in the shape of carbon nanofibers in the feed solution of step a) to favor thermal diffusion inside the obtained microparticles. Therefore, the process of thermal transfer from the inside of the microcapsules to the outside and vice versa is favored by using carbon nanofibers. Carbon nanofibers are added to the feed solution by vigorous stirring, and dispersion can be promoted by means of ultrasound baths.

Once the components of the microcapsules are selected, that is, the encapsulating agent and the phase-change material itself, the solvent and the appropriate operating conditions for preparing the feed solution are chosen.

To be able to select the solvent suitable for achieving the dissolution of these components, which is preferably an organic solvent, the hydrophobic and nonpolar nature of the polymers and the phase-change material has to be taken into account, among other parameters. In addition, solvents with the lowest toxicity are taken into consideration.

According to the solubility parameter (δ) of the polymers used and taking into account that the boiling point of the solvent must be lower than the melting point of the polymer or the mixture thereof used as a casing, the solvent is chosen from a list comprising dearomatized naphthas, diethylene ether, methyl ciclohexane, di-isopropyl ketone, turpentine (α- and β-pinene), ciclohexane, methyl-isobutyl ketone, dipentene, carbon tetrachloride, piperidine, xilene, toluene, 1,2-dichloropropane, ethyl acetate or alkanes (C₆-C₁₀)_{'} Preferably, the solvent is e.g. an alkane (C₆-C₁₀) or a mixture thereof but without restricting to hexane, heptane, octane or decane. Preferably, the solvent is heptane for casings made of low-density polyethylene with or without ethyl vinyl acetate, and for high-density casings, the solvent is preferably a mixture of organic solvents with a boiling point near 140 °C.

The thermodynamics of the solutions prepared in step a) of the process of the invention is least favorable at room temperature. Therefore, this dissolution has to take place at a high temperature, i.e. at a temperature higher than room temperature and e.g. in a system provided with stirring but without sticking to a range between 250 and 300 rpm. Said temperature is selected according to the molecular weight of the polymer to be used.

Tests were conducted to determine the minimum required amount of solvent to achieve the complete dissolution of the polymers, a feed solution of the proper viscosity to make it easier to be subsequently fed to the spray dryer being obtained.

Preferably, in step a) of the process of the invention, the feed solution is heated to temperatures between 60 and 180 °C and with vigorous stirring.

For example, in a solution containing a low-density polyethylene and EVA, temperatures in the range of 65 to 95 °C are required, however, in a high-density polyethylene and EVA solution, temperatures above 100 °C are required.

In another preferred embodiment of step a) of the process of the invention, when solvents such as heptane, octane or decane or solvents derived from dearomatized naphtha mixtures are used, stirring speeds will be high to favor the dissolution of the polymers used.

The solids concentration of the feed solution or the solution of step a) can range from 5 to 50% by weight, the input flow rate of the feed solution from 4 to 12 ml/min and the suction power of the compressor from 32 to 38 m³/h under normal conditions.

The temperature of the drying gas when it enters the chamber of step b) can be set to approximately 10 °C above the boiling temperature of the solvent, and the ratio of the PCM to the encapsulating agent ranges preferably from 1/1 to 2,5/1 by weight, more preferably 2/1 by weight for the low-density polyethylene and EVA case and 2.5/1 for the high-density polyethylene and EVA case.

The addition of a copolymer, e.g. EVA, to paraffin and polyethylene mixtures, e.g. LDPE, increases the mechanical strength of the obtained material. Therefore, the casing can be made up of a polymer (LDPE or HDPE) or a mixture thereof with EVA. The amount of EVA in the microcapsule, however, must not be too high (preferably, not greater than 33% by weight for the case of mixtures with HDPE) as it would promote the migration of the encapsulated material such as e.g. paraffin.

Therefore, the EVA/LDPE ratio is preferably in the range of 0/1 to 0.5/1 and the EVA/HDPE is preferably between 0/1 and 0.6/1. A good output in the encapsulation of the material was obtained throughout the studied range and it was possible to verify that there is no paraffin migration.

The solids obtained in the chamber of step c) and/or in the filtering system of the spray drying equipment in step d) are synthesis byproducts that have not led to the formation of microcapsules. These solid byproducts can be recovered as raw material.

Therefore, in another preferred embodiment, the process of the invention also comprises the step of:
e'. recovering the solids obtained in step c) and/or step d) as raw material that can be reused in the process of the invention.

Furthermore, the unencapsulated phase-change material can be recovered and used in subsequent processes of the invention.

A second aspect of the present disclosure relates to microcapsules obtainable by the process of the invention.

The characteristics of the final product mainly depend on the concentration of solids in the feed solution or initial solution. With the process of the invention, the content of PCM in the microcapsule can be greater than approximately 50% of the total weight of the microcapsule.

On the other hand, the higher the PCM/encapsulating agent ratio, the higher the thermoregulating capacity of the obtained microcapsules.

A third aspect of the present disclosure refers to the use of the microcapsules of the invention as heat accumulators. Preferably, these microcapsules are used as heat accumulators in the construction field.

Throughout the description and the claims, the word "comprises" and its variants do not purport to exclude other technical characteristics, additives, components or steps. Other objects, advantages and characteristics of the invention will emerge for those skilled in the art in part from the description and in part from the practice of the invention. The following examples and drawings are provided by way of example and they do not intend to limit the present invention.

### BRIEF DESCRIPTION OF THE FIGURES

FIG.1.- It depicts the result of the differential scanning calorimetry (DSC) of paraffin (broken line) and of the microcapsules formed by paraffin and the LDPE and EVA polymers (solid line).
**FIG.2****.-** It depicts the results of the scanning electron microscopy (SEM) of the LDPE, EVA and unencapsulated paraffin microcapsules.
**FIG.3****.-** It depicts the result of the differential scanning calorimetry (DSC) of paraffin (broken line) and of the microcapsules formed by paraffin and the HDPE and EVA polymers (solid line).

### EXAMPLES

The invention will be illustrated below by means of tests conducted by the inventors highlighting the specificity and effectiveness of the process of the present invention and of the microcapsules obtained by means of said process.

### EXAMPLE 1: Microencapsulation of paraffin with low-density polyethylene and ethyl vinyl acetate.

The reagents used were:
■ Paraffin, with a melting point near 27 °C.
■ Low-density polyethylene (LDPE) (ALCUDIA^{®} PE-071). Said polyethylene has a density of 919 g/cm³.
■ Ethyl vinyl acetate (EVA) copolymer (ALCUDIA^{®} PA-539). Said polymer has a density of 937 g/cm³.
■ n-heptane with 99% purity (PANREAC).
■ Nitrogen of at least 96% purity.

The reagents used and their amounts are included in Table 1.

**Table 1.- Used Materials and Amounts**

| **Raw Material** | **Paraffin** | **LDPE** | **EVA** | **n-heptane** |
|---|---|---|---|---|
| **Weight (g)** | 10 | 3.33 | 1.67 | 150 |

The amounts of solvent, paraffin, polymer and copolymer were weighted and introduced in a hermetically sealed container provided with a temperature control system and with stirring control. In addition, there was a side opening through which the obtained mixture was fed into the equipment.

The controller temperature was set to 90 °C, and the stirring system was operated, the stirring speed being set to 300 rpm. These conditions were maintained throughout the experiment.

Pure solvent was heated in a similar container, although without stirring. This solvent was used for the initial heating of the feed line of the spray-drying equipment, which prevents the polymer from solidifying and also allows the drying-chamber input and output temperatures to stabilize.

Once the solvent reached 90 °C, the suction power was set to 100% and the nitrogen flow rate to 0.5 Nm³/h.

The heating system of the feed line was switched on and the thermal bath of the spraying area was turned on, preventing solids that could block the atomizer from forming.

The temperature at which nitrogen enters the drying temperature was set to 110 °C. Once the gas temperature was reached, the feeding of pure solvent was started.

After stabilizing the equipment and heating the feed line, the feed pump was operated, provided the mixture obtained in steps 1 and 2 was totally homogeneous.

Once the feeding process was complete, pure solvent was again fed through and subsequently air to clean the feed line.

The microcapsules obtained in the collector of the equipment were removed and placed on adsorbent paper and taken to drying at 50 °C for 2 hours to achieve the total elimination of the unencapsulated paraffin.

As a result of this process, microcapsules were obtained that were characterized by studying their latent heat of fusion by means of the differential scanning calorimetry (DSC) technique, and their thermal stability, morphology and particle-size distribution by means of scanning electron microscopy (SEM) and low-angle laser light scattering (LALLS).

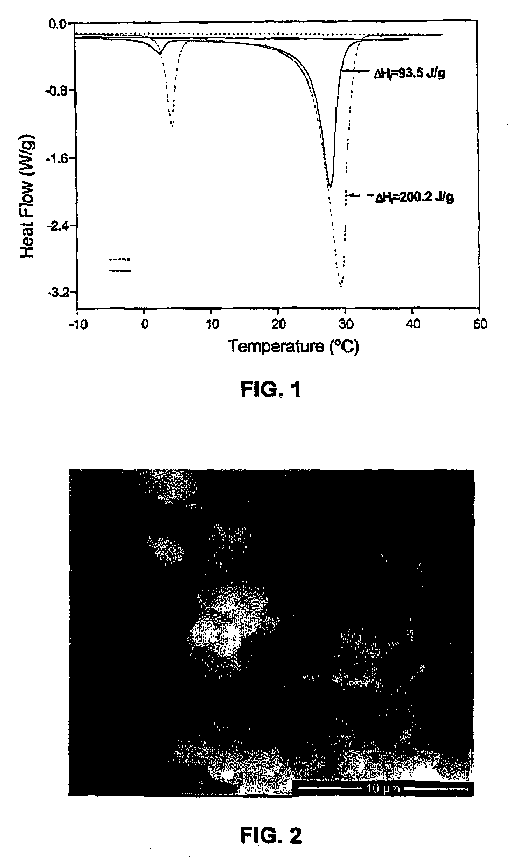

Thus, the heat absorbed by pure paraffin and by the obtained microcapsule is shown in FIG. 1.

From the DSC analyses, it can be said that the paraffin content in the microcapsule is close to 47% by weight.

Thermal stability tests were conducted in a heater and consisted in placing the microcapsules on adsorbent paper at a constant temperature of 50 °C for 2 hours. The results of the DSC of the particles before and after the test were compared and it was found that DSC analyses did not show significant changes.

As can be seen in FIG. 2, the scanning electron microscope can be used to determine the shape and distribution of the particle size of the microcapsules obtained by means of the process of the invention.

It was possible to observe that the shape of these particles was rather spherical and that the size range they had was narrow, from 1 to 5 µm.

### EXAMPLE 2: Microencapsulation of paraffin with high-density polyethylene and ethyl vinyl acetate.

The reagents used were:
■ Commercial paraffin, with a melting point near 27 °C.
■ High-density polyethylene (HDPE) (ALCUDIA® 4810). Said polyethylene has a density of 950 g/cm³.
■ Ethyl vinyl acetate (EVA) copolymer (ALCUDIA^{®} PA-539). Said polymer has a density of 937 g/cm³.
■ Eurostar solvent (dearomatized naphtha fraction). Supplied by Ind. Quimicas Cuadrado S.A.
■ Nitrogen of at least 96% purity.

The reagents used and their amounts are included in Table 2.

**Table 2.- Used Materials and Amounts**

| Product | Paraffin | HDPE | EVA | EUROSTAR |
|---|---|---|---|---|
| Weight (g) | 3.5 | 0.84 | 0.47 | 41 |

The same procedure as in Example 1 was followed save for the feed-solution preparation temperature (150 °C) and the chamber gas-inlet temperature (165 °C).

The characterization methods used were also described above.

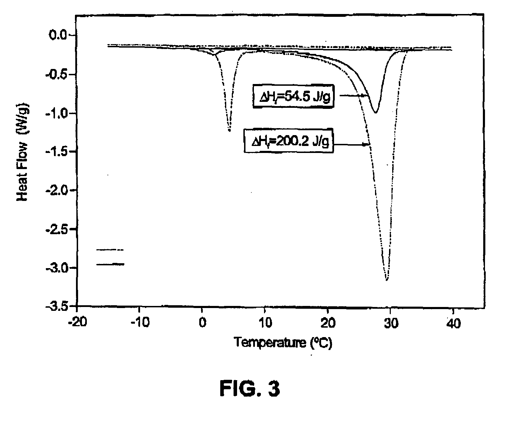

The heat absorbed by pure paraffin and by the obtained microcapsule is shown in FIG. 3. From the DSC analyses, it can be said that the paraffin content in the microcapsule is close to 27 % by weight.

## Claims

1. A phase-change material microencapsulation process, comprising the following steps:
a. preparing a solution of:
i. at least one active phase-change material;
ii. one encapsulating agent comprising one polymer or one polymer and one copolymer; and
iii. one non-aqueous solvent.
b. spraying the solution of step a);
c. placing the dispersion obtained in step b) with a gas stream;
d. separating the microcapsules formed in step c) from the gas stream.

2. A process according to Claim 1, which also comprises the step of:
e. condensing the evaporated solvent obtained in step c).

3. A process according to any of Claims 1 or 2, wherein the encapsulating agent is high-density polyethylene, low-density polyethylene or any of their combinations.

4. A process according to any of Claims 1 to 3, wherein the copolymer used as encapsulating agent is ethyl vinyl acetate.

5. A process according to any of Claims 1 to 4, wherein the active phase change material is an organic compound.

6. A process according to any of Claims 1 to 5, wherein the active phase change material is paraffin.

7. A process according to any of Claims 1 to 6, wherein carbon nanofibers are also added to the solution of step a).

8. A process according to any of Claims 1 to 7, wherein the solvent is chosen from a list comprising alkanes C₆-C₁₀, dearomatized naphtha, diethylene ether, methyl ciclohexane, di-isopropyl ketone, a-pinene, b-pinene, ciclohexane, methyl-isobutyl ketone, dipentene, carbon tetrachloride, piperidine, xilene, toluene, 1,2-dichloropropane, or ethyl acetate.

9. A process according to any of Claims 1 to 8, wherein the preparation of the solution is carried out at a temperature between 60 and 180 °C and by stirring.

10. A process according to any of Claims 1 to 9, which also comprises the step of:
e'. recovering the solids obtained in step c) and/or step d) as raw material.

11. A process according to any of Claims 1 to 10, wherein the unencapsulated phase-change material is recovered as raw material.

12. A process according to any of Claims 1 to 11, wherein the gas stream separated in step d) is recirculated again into the system.

## Patentansprüche

1. Verfahren zur Mikroverkapselung eines Phasenwechselmaterials, das folgende Schritte umfasst:
a. Herstellen einer Lösung aus:
i. mindestens einem aktiven Phasenwechselmaterial;
ii. einem Verkapselungsmittel, das ein Polymer oder ein Polymer und ein Copolymer umfasst; und
iii. einem nichtwässrigen Lösungsmittel;
b. Versprühen der Lösung aus Schritt a);
c. Einführen der in Schritt b) erhaltenen Dispersion in einen Gasstrom;
d. Abtrennen der in Schritt c) gebildeten Mikrokapseln aus dem Gasstrom.

2. Verfahren nach Anspruch 1, das außerdem folgenden Schritt umfasst:
e. Kondensieren des verdampften, in Schritt c) erhaltenen Lösungsmittels.

3. Verfahren nach einem der Ansprüche 1 oder 2, wobei das Verkapselungsmittel Polyethylen hoher Dichte, Polyethylen niedriger Dichte oder eine Kombination daraus ist.

4. Verfahren nach einem der Ansprüche 1 bis 3, wobei das als Verkapselungsmittel verwendete CopolymerEthylvinylacetat ist.

5. Verfahren nach einem der Ansprüche 1 bis 4, wobei das aktive Phasenwechselmaterial eine organische Verbindung ist.

6. Verfahren nach einem der Ansprüche 1 bis 5, wobei das aktive Phasenwechselmaterial Paraffin ist.

7. Verfahren nach einem der Ansprüche 1 bis 6, wobei der Lösung aus Schritt a) außerdem Kohlenstoff-Nanofasern zugesetzt werden.

8. Verfahren nach einem der Ansprüche 1 bis 7, wobei das Lösungsmittel aus einer Liste ausgewählt wird, die C₆-C₁₀-Alkane, dearomatisiertes Naphtha, Diethylether, Methylciclohexan, Diisopropylketon, a-Pinen, b-Pinen, Ciclohexan, Methylisobutylketon, Dipenten, Kohlenstofftetrachlorid, Piperidin, Xylol, Toluol, 1,2-Dichlorpropan oder Ethylacetat umfasst.

9. Verfahren nach einem der Ansprüche 1 bis 8, wobei die Herstellung der Lösung bei einer Temperatur von 60 bis 180°C und unter Rühren erfolgt.

10. Verfahren nach einem der Ansprüche 1 bis 9, das außerdem folgenden Schritt umfasst:
e'. Rückgewinnung der in Schritt c) und/oder Schritt d) erhaltenen Feststoffe als Rohstoff.

11. Verfahren nach einem der Ansprüche 1 bis 10, wobei das nicht verkapselte Phasenwechselmaterial als Rohstoff zurückgewonnen wird.

12. Verfahren nach einem der Ansprüche 1 bis 11, wobei der in Schritt d) abgetrennte Gasstrom erneut in das System zurückgeführt wird.

## Revendications

1. Un procédé de microencapsulation de matière à changement de phase, comprenant les étapes suivantes :
a. préparer une solution de :
i. au moins une matière à changement de phase active ;
ii. un agent d'encapsulation comprenant un polymère ou un polymère et un copolymère ; et
iii. un solvant non aqueux.
b. pulvériser la solution de l'étape a) ;
c. placer la dispersion obtenue au cours de l'étape b) avec un courant gazeux ;
d. séparer du courant gazeux les microcapsules formées au cours de l'étape c).

2. Un procédé selon la revendication 1, qui comprend aussi l'étape consistant à :
e. condenser le solvant évaporé obtenu au cours de l'étape c).

3. Un procédé selon n'importe laquelle des revendications 1 ou 2, dans lequel l'agent d'encapsulation est du polyéthylène haute densité, du polyéthylène basse densité ou n'importe laquelle de leurs combinaisons.

4. Un procédé selon n'importe laquelle des revendications 1 à 3, dans lequel le copolymère utilisé comme agent d'encapsulation est de l'éthyle-vinyle-acétate.

5. Un procédé selon n'importe laquelle des revendications 1 à 4, dans lequel la matière à changement de phase active est un composé organique.

6. Un procédé selon n'importe laquelle des revendications 1 à 5, dans lequel la matière à changement de phase active est de la paraffine.

7. Un procédé selon n'importe laquelle des revendications 1 à 6, dans lequel des nanofibres de carbone sont également ajoutées à la solution de l'étape a).

8. Un procédé selon n'importe laquelle des revendications 1 à 7, dans lequel le solvant est choisi dans une liste comprenant des alcanes C₆-C₁₀, naphta désaromatisé, 1,4-dioxane, méthylcyclohexane, diisopropylcétone, a-pinène, b-pinène, cyclohexane, méthylisobutylcétone, dipentène, tétrachlorure de carbone, pipéridine, xylène, toluène, 1,2-dichloropropane, ou acétate d'éthyle.

9. Un procédé selon n'importe laquelle des revendications 1 à 8, dans lequel la préparation de la solution est réalisée à une température comprise entre 60 et 180°C et par agitation.

10. Un procédé selon n'importe laquelle des revendications 1 à 9, qui comprend aussi l'étape consistant à :
e'. récupérer les solides obtenus au cours de l'étape c) et/ou l'étape d) en tant que matière première.

11. Un procédé selon n'importe laquelle des revendications 1 à 10, dans lequel la matière à changement de phase non encapsulée est récupérée en tant que matière première.

12. Un procédé selon n'importe laquelle des revendications 1 à 11, dans lequel le courant gazeux séparé au cours de l'étape d) est remis en circulation dans le système.
